# EUROPEAN PATENT APPLICATION

(11) **EP 4 815 339 A1**
(43) Date of publication of application: **30.09.2026**
(21) Application number: 26165089.9
(22) Date of filing: 16.03.2026
(51) Int. Cl.: H04B 10/25, G02B 6/44, H04B 10/80

(54) **ACTIVE TRACEABLE FIBER OPTIC CABLE**

(30) Priority: 28.03.2025 US 202563779620 P; 09.03.2026 US 202619560532
(71) Applicant: Panduit Corp., Tinley Park, Illinois 60487 (US)
(72) Inventor: Huang, Yu, Tinley Park, 60487 (US); Castro, Jose M., Tinley Park, 60487 (US); Duan, Alexander Z., Tinley Park, 60487 (US); Bulent, Kose, Tinley Park, 60487 (US)
(74) Representative: Sona, Alessandro

(57) **Abstract**

A fiber optic cable is provided that includes active tracing features that enable active tracing for the fibers included in the fiber optic cable. By including such tracing features to the fiber optic cable, the fiber tracing process is made more efficient and less prone to human errors.

## Description

### CROSS-REFERENCE TO RELATED APPLICATION(S)

The application claims benefit to U.S. Provisional Patent Application No. 63/779,620, filed on March 28, 2025, the entirety of which is hereby incorporated by reference herein.

### TECHNICAL FIELD

The application relates to the field of fiber optic cables, and more specifically to an active traceable fiber optic cable that includes active fiber tracing features that enable active tracing of the fibers included in the active traceable fiber optic cable.

### BACKGROUND

As the data demands continue to increase across all different use cases and industries, the demand for the latest data transmission equipment capable of handling such higher data transmission rates also continues to increase. In this regard, the demand for reliable and traceable fiber optic cables has significantly increased in telecommunications and data transmission. Fiber optic cables are the backbone of modem communication networks, serving a crucial role in transmitting data over long distances with minimal signal loss. These fiber optic cables may be used in various applications, including internet infrastructure, telecommunications, and data centers.

One of the challenges in maintaining and managing fiber optic networks is the ability to quickly trace, locate, and identify specific fibers within a cable. When a problem arises, such as a break or signal degradation, technicians must quickly identify the affected fiber and rectify the issue. Various techniques and solutions have been employed to address the challenges associated with fiber identification and tracing. However, the existing solutions have been mostly manual solutions, such as reading color-coded fiber optic cables, which still require manual inputs that are vulnerable to human error.

### SUMMARY

Traditional methods for tracing fibers involve time consuming and labor-intensive manual processes that are also prone to human error. To address these issues, disclosed herein are exemplary active traceable fiber optic cables that are configured to enable fast and accurate fiber identification from within a plurality of fibers. The active traceable fiber optic cable disclosed herein strives to introduce an enhanced and cost-effective solution that transcends the constraints of conventional methods. By integrating cutting-edge technology directly into the fiber optic cable, it presents a streamlined and precise approach for tracing and identifying individual fibers and their serial number, irrespective of the cable's length. This innovation enables rapid, error-free, installation and simplified maintenance procedures.

According to an embodiment, disclosed is a fiber optic cable comprising a fiber, a power source, a first fiber optic connector coupled to a first end of the fiber optic cable, wherein the first fiber optic connector is configured to be in communication with a tester device to receive a trigger signal from the tester device, a second fiber optic connector coupled to a second end of the fiber optic cable, a first wavelength division multiplexer (WDM), the first WDM configured to receive the trigger signal from the tester device, a second WDM configured to reflect the trigger signal, a receiver configured to receive the trigger signal and convert the trigger signal into a digital signal, a serial number (SN) pattern generator coupled to the power source, a switch configured to establish a connection between the power source and the SN pattern generator based on receiving the digital signal, and a visual indicator configured to be activated to emit a light by a power signal from the SN pattern generator. The switch may be in communication with the receiver, the SN pattern generator, and the power source.

A detailed description of these and other non-limiting exemplary embodiments of the active traceable fiber optic cable is set forth below together with accompanying drawings.

### BRIEF DESCRIPTION OF THE DRAWINGS

FIG. 1 is an exemplary block diagram representing an active traceable fiber optic cable including fiber optic connectors at both ends, according to some embodiments.
FIG. 2 is an exemplary block diagram representing the active traceable fiber optic cable shown in FIG. 1 being utilized for transmission of data via fiber optic adapters, according to some embodiments.
FIG. 3 is an exemplary block diagram representing the active traceable fiber optic cable shown in FIG. 1 being utilized according to a testing mode, according to some embodiments.
FIG. 4 is an exemplary system diagram representing the active traceable fiber optic cable shown in FIG. 1 being utilized for transmission of data, according to some embodiments.
FIG. 5 is an exemplary system diagram representing the active traceable fiber optic cable shown in FIG. 1 being utilized in the testing mode, according to some embodiments.
FIG. 6 is an exemplary system diagram representing the active traceable fiber optic cable shown in FIG. 1 being utilized for both the transmission of data and the testing mode, according to some embodiments.

### DETAILED DESCRIPTION

Detailed and non-limiting embodiments of the active traceable fiber optic cable are disclosed herein. However, it is to be understood that the disclosed embodiments are merely exemplary and may take various and alternative forms. The figures may not necessarily to scale, and features may be exaggerated or minimized to show details of particular components. Therefore, specific structural and functional details disclosed herein are not to be interpreted as limiting, but merely as a representative basis for teaching one skilled in the art.

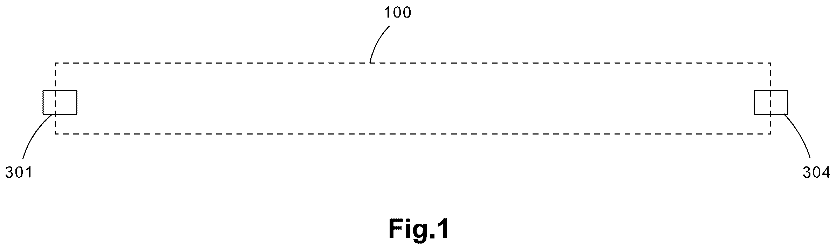

Disclosed herein is an active traceable fiber optic cable (hereinafter may be referred to as the "cable") that provides the feature of assigning a unique serial number (SN) to the cable. FIG. 1 illustrates an exemplary embodiment of this cable 100, where the cable 100 comprises a fiber optic cable including a protective outer layer and a plurality of fibers housed within the outer layer. The cable 100 may further include a first fiber optic connector 301 connected at a first end of the cable 100, and a second fiber optic connector 304 connected at a second end of the cable, where the second end of the cable is at an opposite end to the first end of the cable. So physically from the outside, the cable 100 may resemble a conventional fiber optic cable. However, in addition to these otherwise typical physical characteristics, the cable 100 is assigned a unique SN for enabling the active tracing functionality of the cable 100, as will be described in more detail herein.

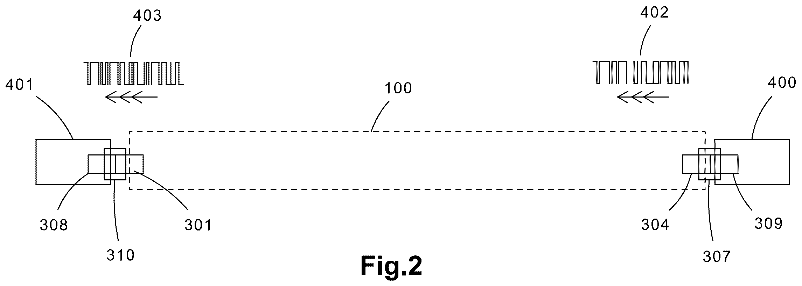

In FIG. 2, the cable 100 is shown to be operating in a standard communication mode much like a conventional fiber optic cable, according to an exemplary embodiment. At its second end, the second fiber optic connector 304 of the cable 100 is shown to be connected to another fiber optic connector 309 included, for example, in a fiber optic transmitter 400, via a fiber optic adapter 307. At its opposite first end, the first fiber optic connector 301 of the cable 100 is shown to be connected to another fiber optic connector 308 included, for example, in a fiber optic receiver 401, via a fiber optic adapter 310.

The fiber optic transmitter 400 may be configured to transmit a communication signal at a designated wavelength λ₀ 402 to the cable 100, where the cable 100 is assigned with its own SN information. The fiber optic receiver 401 may then be configured to receive the communication signal transmitted at the same wavelength, λ₀, as the fiber optic transmitter 400. However, due to natural attenuation in the cable 100 and the two connection points made via the fiber optic adapters 307, 310, the signal 403 received by the fiber optic receiver 401 may have a smaller amplitude. This system diagram setup disclosed in FIG. 2 illustrates an exemplary operation of a standard fiber optic communication link.

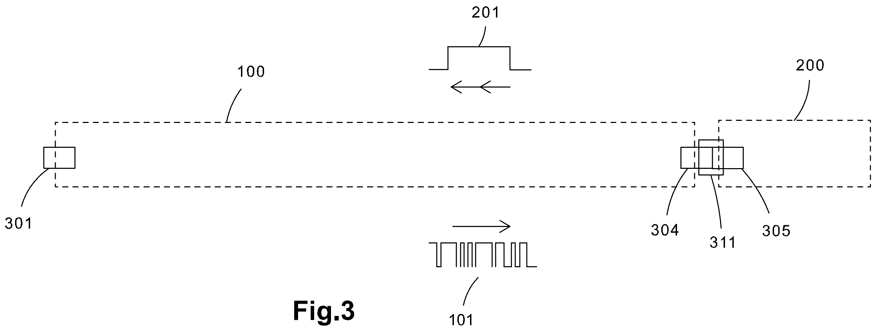

FIG. 3 shows the cable 100 connected to a fiber optic connector 305 included in a serial number tester (SN tester) 200 via a fiber optic adapter 311, according to an exemplary embodiment. When a user wants to obtain the SN information of the cable 100, the SN tester 200 initiates a testing process. This testing process begins with the SN tester 200 transmitting a trigger signal 201. The trigger signal 201 operates at a distinct wavelength, denoted as λ₁, which differs from the typical working wavelength λ₀ that is used in transmitting signals a standard single-mode fiber (SMF), which may operate, for example, at wavelengths of 850, 1310, or 1550 nanometers (nm).

Upon reception of the trigger signal 201, the cable 100 responds by transmitting its unique SN information in a SN information signal 101 back to the SN tester 200. The SN information signal 101 may be transmitted at another distinct wavelength, denoted as the wavelength λ₂, which, like the wavelength λ₁, differs from the standard working wavelength λ₀ of signals that are communicated in the standard SMF. This communication allows the SN tester 200 to retrieve the SN information of the cable 100 effectively and efficiently.

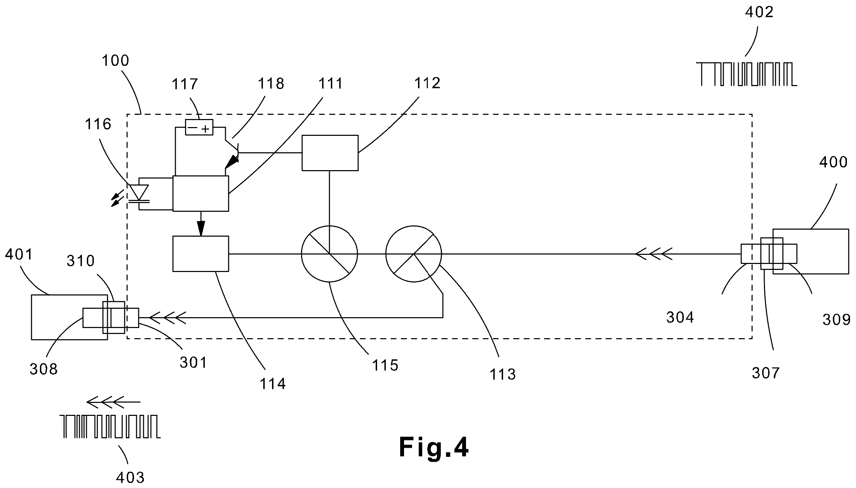

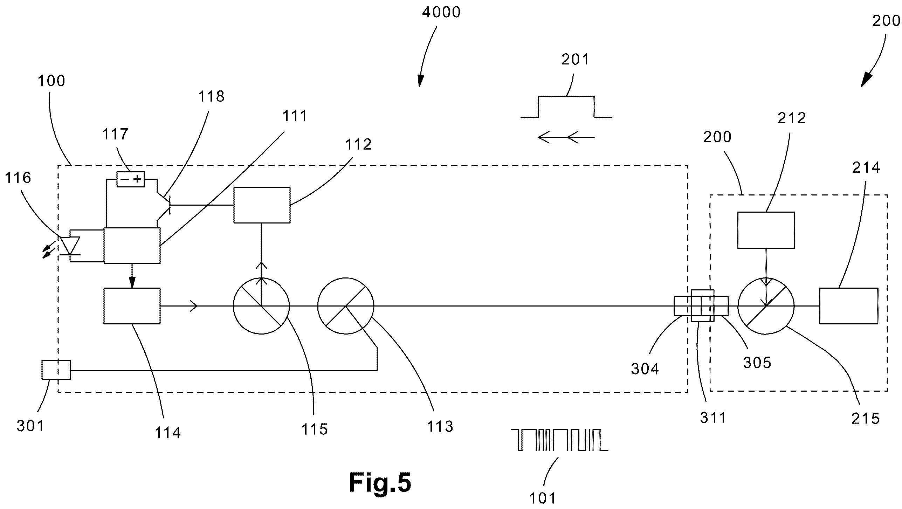

FIGs. 4 and 5 shows an exemplary cable system 4000 that includes components that may further comprise the cable 100 to enable the cable 100 to operate in the communication mode depicted in FIG. 2. One component included in the cable system 4000 is a first wavelength division multiplexer (WDM) 113. The first WDM 113 may include a thin film filter to separate the paths of fiber optic signals at different wavelengths. In other words, the first WDM 113 is configured to allow only signals operating at predetermined frequencies through. The first WDM 113 reflects the signal travelling at wavelength λ₀ transmitted from the transmitter 400 to the fiber optic receiver 401, allowing the cable 100 having its assigned SN information, to function like a traditional fiber optic cable.

FIG. 5 shows the cable system 4000 in communication with an SN tester 200, where the cable system 4000 and the SN tester 200 are configured together to implement the testing mode for the cable 100, as depicted in FIG. 3.

From FIG. 5, it is shown that when the SN tester 200 dispatches a trigger signal 201 at wavelength λ₁ for transmission to the cable 100, the first WDM 113 permits the trigger signal 201 having the wavelength λ₁ to pass through the first WDM 113. After passing through the first WDM 113, the trigger signal 201 then reaches a second WDM 115, which in turn, reflects the trigger signal 201 at wavelength λ₁ towards a fiber optic receiver 112 designed to operate at the same wavelength.

Upon receiving the trigger signal 201, the receiver 112 converts the trigger signal 201, which is an optical signal, into an electrical signal equivalent (i.e., a digital signal).

The receiver 112 subsequently triggers a transistor 118, thus establishing a connection between a battery 117 and an SN pattern generator 111. Upon activation by the power supplied by the battery 117, the SN pattern generator 111 initiates a sequence of actions. This sequence may begin with the SN pattern generator 111 activating a visible light emitting diode (LED) 116, where the LED 116 is configured to emit a light to serve as a visual signal to inform the user of the precise endpoint location of the cable 100.

Moreover, the SN pattern generator 111 dispatches an electrical signal containing the SN information programmed into a memory of the SN pattern generator 111, where the SN information corresponds to the SN assigned to the cable 100.

This electrical signal may also be transmitted to a fiber optic transmitter 114. The fiber optic transmitter 114 transforms the electrical signal containing the SN information into a fiber optic signal 101 operating at a wavelength λ₂. The second WDM 115 and the first WDM 113 are configured to permit the passage of signals operating at the wavelength λ₂, thus ensuring the transmission of the fiber optic signal 101 including the SN information at a third WDM 215 included inside the SN tester 200. The third WDM 215 operates identically to WDM 115, enabling the signal 101 operating at the wavelength λ₂ to pass through to a fiber optic receiver 214 designed to work at wavelength λ₂.

The trigger signal 201 operating at wavelength λ₁ is generated by a fiber optic transmitter 212 and is reflected by the third WDM 215 onto the cable 100, where the cable 100 includes the SN information. This process allows the SN tester 200 to transmit the trigger signal 201 to the cable 100 and receive the SN information assigned to the cable 100 in return.

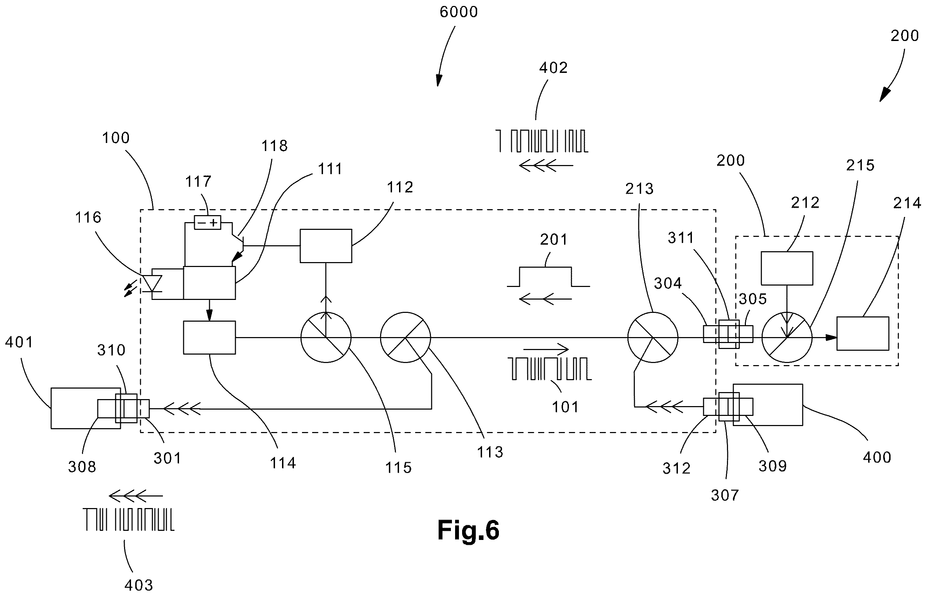

FIG. 6 shows an exemplary cable system 6000 including components that may be included in the cable 100 to enable the cable 100 to operate in both the communication mode, as exemplified by the cable system 4000 shown in FIG. 4, and the testing mode, as exemplified by the cable system 4000 and the SN tester 200 shown in FIG. 5. According to some embodiments, the cable system 6000 may enable simultaneous implementation of the communication mode and the testing mode.

In addition to the components included in the cable system 4000, the cable system 6000 introduces a fourth WDM 213. The fourth WDM may be identical in function to the first WDM 113.

In the cable system 6000, the fourth WDM 213 may serve a dual purpose. For example, the fourth WDM 213 may be configured to reflect the communication signal 402 that operates at wavelength λ₂ sent by a fiber optic transmitter 400 to the cable 100. Simultaneously, the trigger signal 201 that operates at wavelength λ₁ from the SN tester 200 may seamlessly pass through the fourth WDM 213 to reach the cable 100. This trigger signal 201 prompts the cable 100 to transmit the SN information signal 101 at wavelength λ₂ in response. Notably, the SN information signal 101 at wavelength λ₂ also passes through WDM 213 before reaching the SN tester 200.

This configuration of the cable system 6000 enables the cable 100 to function seamlessly in both the communication mode and the SN testing mode. In particular, the cable system 6000 enables the active tracing feature for the cable 100 described herein.

So disclosed herein is an active traceable fiber optic cable, wherein the active traceable fiber optic cable may be connected to a standard fiber optic transmitter and receiver at its two ends and pass the fiber optic signal from the transmitter to the receiver, like a standard fiber optic cable, wherein the active traceable fiber optic cable can be connected to a serial number (SN) tester, which can send a trigger signal to the active traceable fiber optic cable and trigger the electrical circuit in the cable to send the serial number of the active traceable fiber optic cable back to the SN tester.

The active traceable fiber optic cable may include at least one wavelength division multiplexer (WDM) to direct the communication signal sent to one end of the cable by a standard fiber optic transmitter to the other end of the cable and can be received by a standard fiber optic receiver.

According to this active traceable fiber optic cable, at least one WDM is configured to direct a trigger signal sent by an SN tester to one end of the cable to a fiber optic receiver which is connected to a switch of a circuit consisting of a SN pattern generator and a power source.

According to this active traceable fiber optic cable, the trigger signal received by the fiber optic receiver is configured to turn on a switch of the circuit to power the SN pattern generator, wherein the SN pattern generator is configured to send the already programmed serial number information to a fiber optic transmitter, convert the electrical signal with SN information to a fiber optic signal with SN information, and then transmit the fiber optic signal to the SN tester via the at least one WDM.

According to this active traceable fiber optic cable, the SN tester includes a WDM configured to direct the trigger signal from the transmitter of the SN tester to the active traceable fiber optic cable and direct the fiber optic signal containing the SN information from the active traceable fiber optic cable to the receiver of the SN tester.

According to this active traceable fiber optic cable, the circuit's power source may be a battery.

According to this active traceable fiber optic cable, the SN pattern generator is connected to a visual indicator, such as an LED, wherein the visual indicator is configured to turn on when the SN pattern generator is turned on.

According to this active traceable fiber optic cable, an additional WDM is further added to the cable to direct both the trigger signal of the SN tester and the communication signal from the standard fiber optic transmitter to the active traceable fiber optic cable, allowing the active traceable fiber optic cable to carry the communication signal and to be tested by the SN tester simultaneously.

The present disclosure thus describes an active traceable fiber optic cable, and methods for utilizing the active traceable fiber optic cable in different modes such as, but not necessarily limited to, a communication mode and a testing mode. As is readily apparent from the foregoing, various non-limiting embodiments of the active traceable fiber optic cable and methods for utilizing the active traceable fiber optic cable have been described. While various embodiments have been illustrated and described herein, they are exemplary only and it is not intended that these embodiments illustrate and describe all those possible. Instead, the words used herein are words of description rather than limitation, and it is understood that various changes may be made to these embodiments without departing from the scope of the following claims.

## Claims

1. A fiber optic cable comprising:
a fiber;
a power source;
a first fiber optic connector coupled to a first end of the fiber optic cable, the first fiber optic connector configured to be in communication with a tester device to receive a trigger signal from the tester device;
a second fiber optic connector coupled to a second end of the fiber optic cable;
a receiver configured to receive the trigger signal and convert the trigger signal into a digital signal;
a serial number, SN, pattern generator coupled to the power source;
a switch in communication with the receiver, the SN pattern generator, and the power source, wherein the switch is configured to establish a connection between the power source and the SN pattern generator based on receiving the digital signal; and
a visual indicator configured to be activated to emit a light by a power signal from the SN pattern generator.

2. The fiber optic cable of claim 1, wherein the SN pattern generator is further configured to generate SN information corresponding to the fiber optic cable and transmit the SN information in an SN information signal back to the tester device.

3. The fiber optic cable of any preceding claim, wherein the visual indicator is a light emitting diode.

4. The fiber optic cable of any preceding claim, wherein the power source is a battery.

5. The fiber optic cable of any preceding claim, further comprising:
a first wavelength division multiplexer, WDM, the first WDM configured to receive the trigger signal from the tester device; and
a second WDM configured to reflect the trigger signal.

6. The fiber optic cable of claim 5, further comprising:
a third fiber optic connector coupled to a fiber optic transmitter at the first end of the fiber optic cable; and
a third WDM configured to direct both the trigger signal received from the tester device and a communication signal received from the fiber optic transmitter coupled to the third fiber optic connector.

7. The fiber optic cable of any preceding claim, wherein the SN information signal is transmitted in a second wavelength that is different from a first wavelength in which signals are transmitted in a standard single-mode fiber.

8. The fiber optic cable of any preceding claim, wherein the SN information signal is transmitted in a second wavelength that is different from a first wavelength in which signals are transmitted in a standard single-mode fiber, wherein the first wavelength is one of 850 nanometers, 1310 nanometers, or 1550 nanometers.

9. A method comprising:
providing the fiber optic cable of any preceding claim;
transmitting, from the first end of the fiber optic cable, the trigger signal from the tester device;
receiving, at the receiver, the trigger signal and converting the trigger signal into the digital signal;
establishing, by the switch, a connection between the power source and the SN pattern generator based on receiving the digital signal; and
causing the visual indicator to be activated to emit a light by a power signal from the SN pattern generator.
